# EUROPEAN PATENT SPECIFICATION

(11) **EP 0 377 939 B1**
(45) Date of publication and mention of the grant of the patent: **08.05.1996**
(21) Application number: 89309635.4
(22) Date of filing: 21.09.1989
(51) Int. Cl.: G05B 19/418

(54) **Robot control system for controlling a set of industrial robots**
Robotersteuerungssystem zur Steuerung einer Mehrzahl von industriellen Robotern
Système de commande de robot pour commander un ensemble de robots industriels

(30) Priority: 10.01.1989 JP 3089/89; 10.01.1989 JP 3088/89
(43) Date of publication of application: 18.07.1990
(73) Proprietor: KABUSHIKI KAISHA KOBE SEIKO SHO, Kobe 651 (JP)
(72) Inventor: Otera, Nobuyuki 4-38-21, Kitaochiai, Kobe-shi Hyogo-Ken (JP); Nishimura, Toshihiko, Nada-ku Kobe-shi Hyogo-Ken (JP); Takahashi, Toru, Kobe-shi Hyogo-Ken (JP)
(74) Representative: Blake, John Henry Francis

(56) References cited:
- EP-A- 0 067 446
- DE-A- 3 416 227
- GB-A- 2 208 553
- 1986 INTERNATIONAL CONFERENCE ON INDUSTRIAL ELECTRONICS, CONTROL AND INSTRUMENTATION, SEPTEMBER 29- OCTOBER 3, 1986, MILWAUKEE, WI, US vol. 1, 1986, NEW YORK, US pages 233 - 237; MOTOYASU NAGATA: "INTERPROCESS COMMUNICATION FOR ROBOT CONTROL"

## Description

The present invention relates to a robot control system for controlling a set of industrial robots (hereinafter referred to simply as "robots") for cooperative operation and, more specifically, to a robot control system for controlling a set of robots for cooperative operation according to a single control program.

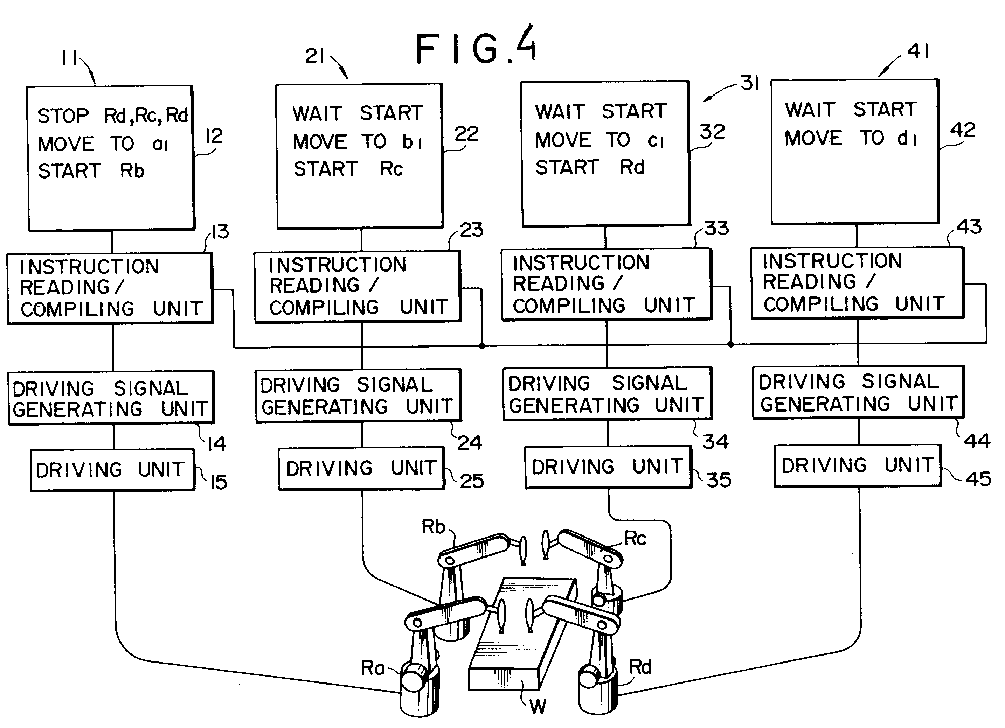

Referring to Fig. 4, a conventional robot control system for controlling a set of four robots Ra, Rb, Rc and Rd for processing a work W comprises memories 12, 22, 32 and 44, reading/compiling units 13, 23, 33 and 43, instruction executing units 14, 24, 34 and 44, and servomechanisms 15, 25, 35 and 45, respectively, for controlling robots Ra, Rb, Rc and Rd. The reading/compiling units 13, 23, 33 and 43 are interconnected by a communication line 50 for the cooperative operation of the robots Ra, Rb, Rc and Rd.

Individual control programs respectively for controlling the robots Ra, Rb, Rc and Rd are stored respectively in the memories 12, 22, 32 and 42. The control programs are made so that the robots Ra, Rb, Rc and Rd will not interfere with each other during operation and will operate in a predetermined sequence.

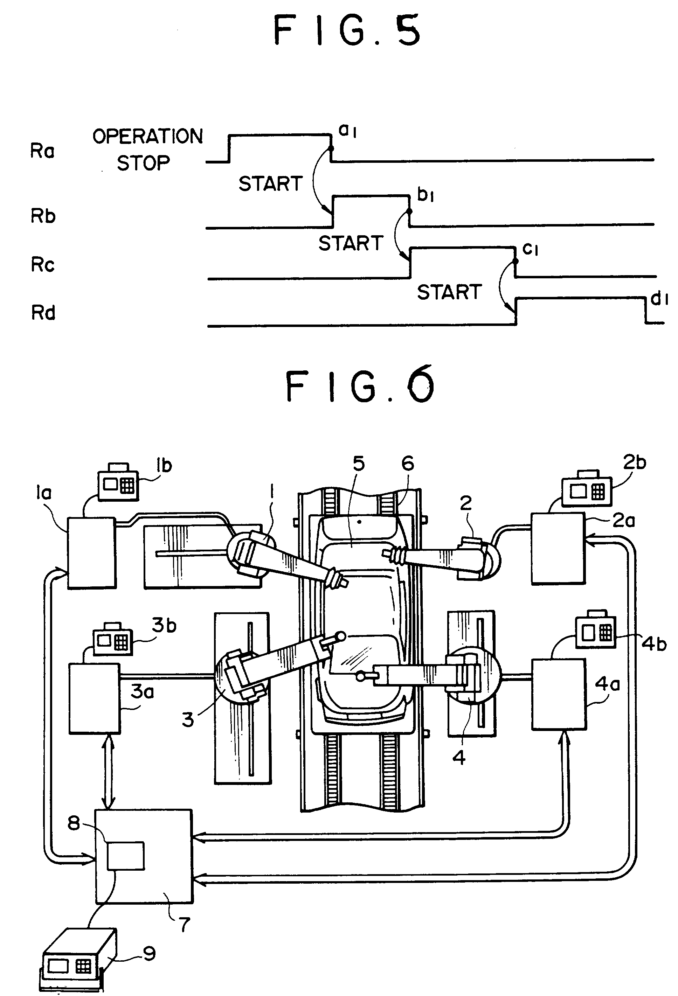

When the robots Ra, Rb, Rc and Rd are operated sequentially one at a time as shown in Fig.5, each of the control programs includes communication instructions, such as STOP, START and WAIT, for communication between the robots Ra, Rb, Rc and Rd in addition to an operation instruction, such as MOVE TO.

In such a conventional robot control system for controlling a plurality of robots for cooperative operation, a position is expressed in the program by a coordinate system special for the corresponding robot. Therefore, it is difficult to determine the respective positions of the robots relative to each other, and hence it is difficult to make programs capable of satisfactorily controlling the robots for cooperative operation and avoiding collision between the robots.

Furthermore, since the programs are made individually for the robots, it is difficult to realize the relation between the actions of the robots from the programs and hence it is difficult to find errors in the programs and to correct the programs.

Fig. 6 shows another conventional robot control system for controlling four robots Ra, Rb, Rc and Rd for cooperative operation to process a work W. The robot control system comprises a system controller 7, robot controllers 1a, 2a, 3a and 4a respectively for controlling the robots Ra, Rb, Rc and Rd, connected to the system controller 7, teaching units 1b, 2b, 3b and 4b connected respectively to the robot controllers 1a, 2a, 3a and 4a to teach the robots Ra, Rb, Rc and Rd, and a sequence program input unit 9 connected to the system controller 7 to give an actuating sequence control program to the system controller 7. Control programs are stored respectively in the memories of the robot controllers 1a, 2a, 3a and 4a to control the robots Ra, Rb, Rc and Rd for a series of operations. Also connected to and controlled by the system controller 7 are auxiliary equipment including a conveyor 6 for conveying the work W, a positioning device for positioning the work 1, chucking mechanisms, safety mechanisms, and interlocking mechanisms for avoiding interference between the robots Ra, Rb, Rc and Rd. A sequence controller 8 included in the system controller 7 controls the robots Ra, Rb, Rc and Rd and the auxiliary equipment for sequential operation.

This conventional robot control system requires the robot controllers and the teaching units individually for the plurality of robots, and must teach operating procedures individually to the plurality of robots every time the contents of process changes. The system controller provided in addition to the robot controllers increases the floor space necessary for installing the robot control system.

Furthermore, complicated wiring to interconnect the robots and the robot controllers, and the robot controllers and the system controller for controlling the robots for coordinated cooperative operation requires much time for designing and installing the wiring.

When the work is changed or modified requiring changing the robots and the auxiliary equipment, the modification of the machining system and the robot control system, and teaching new motions to the robots require much time.

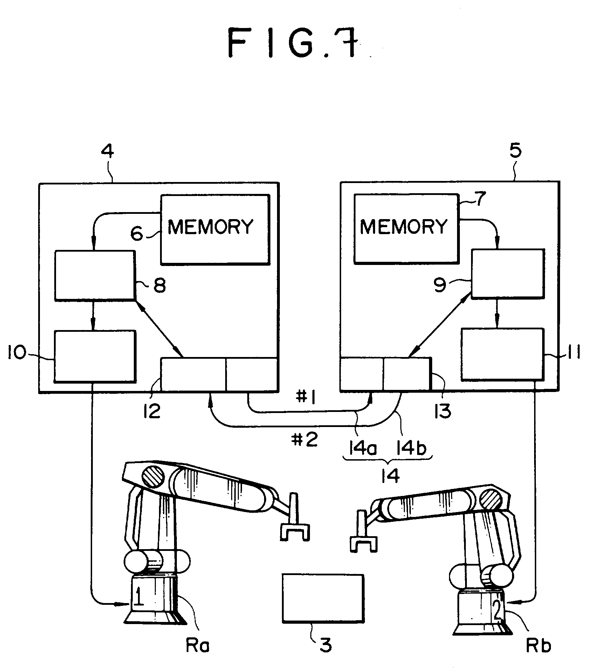

Fig. 7 shows a third conventional robot control system for controlling two robots Ra and Rb for cooperative operation to process a work W. The robot control system comprises two robot controllers 4 and 5 respectively for controlling the robots Ra and Rb.

The robot controller 4 (5) comprises a memory 6 (7), an instruction compiler 8 (9), a driving unit 10 (11), and a synchronizing unit 12 (13). The synchronizing units 12 and 13 of the robot controllers 4 and 5 are interconnected by an external communication cable 14 to control the robots Ra and Rb for synchronous operation.
Individual control programs for controlling the robots Ra and Rb are stored respectively in the memories 6 and 7. The control programs must be designed to control the robots Ra and Rb for predetermined sequential operation so that the robots will not interfere with each other.

In executing the control programs, contact inputs and outputs are transmitted through the external communication cable 14 between the synchronizing units 12 and 13.

Examples of the control programs for controlling the robots Ra and Rb include the following instructions.
Control Program for the Robot Ra:
MOVE TO P₁
OUT #1, ON
WAIT UNTIL #2 = ON
MOVE TO P₃
Control Program for the Robot Rb:
WAIT UNTIL #1 = ON
MOVE TO P₂
OUT #2, ON

According to these instructions, the robot Rb starts to operate upon the arrival of the robot Ra at a set position P₁, while the robot Ra remains in a standby state until the robot Rb arrives at a set position P₂. Upon the arrival of the robot Rb at the set position P₂, the robot Ra moves to a set position P₃. A signal indicating the arrival of the robot Ra at the set position P₁ is transmitted through a line 14a of the external communication cable 14, and a signal indicating the arrival of the robot Rb at the set position P2 is transmitted through a line 14b of the external communication cable 14.

Thus, this conventional robot control system needs the external communication cable 14 and the synchronizing units 12 and 13 for communication between the robot controllers 4 and 5 to control the robots Ra and Rb for synchronous operation. The external communication cable 14 must have an increased number of lines for specific purposes to transmit increased amount of information between the robot controllers 4 and 5. Accordingly, the robot control system is expensive, and the modification of the robot control system for adaptation to different processes is difficult.

In EP-A-0067446, which discloses the preamble of claim 1, there is provided a robot control data processing apparatus capable of effecting work allotment to multiple robots and instantaneously editing necessary robot control data to thereby follow changes of work field situation. The robot control data processing apparatus comprises a robot control data dividing processor for dividing a robot control data adapted for monitoring and controlling robots into a plurality of operation elements and storing the robot control data in unit of the operation element, and a robot control data editing processor for selectively combining and editing one or more of the plurality of the divisional operation elements.

US-A-4633385 provides a method for controlling an operation sequence of multiple robots which allows easy preparation of a cooperative operation sequence including interlocks for synchronization and exclusion among machine tools or an operation sequence including a number of operation patterns and allows easy test and debugging of the operation sequence and easy correction of the operation sequence. There are provided means for storing a start sequence (execution start order) of the unit operations to be synchronized or excluded, means for storing the execution status of the unit operations and means for storing operation commands for starting the unit operations, and the unit operation to be started is determined based on the start sequence of the unit operations and the execution status stored in the memory means and corresponding operation commands are read out of the memory means to sequentially start the unit operations.

According to the present invention there is provided a robot control system for controlling a plurality of industrial robots for cooperative operation on a single workpiece, comprising;
storage means storing a single program comprising actuating instructions for actuating the industrial robots;
a single reading/compiling means for reading the actuating instructions and extracting the actuating instructions for each industrial robot separately; and
a plurality of executive means driving respective industrial robots according to the actuating instructions ; characterised in that
the single program incorporates the actuating instructions for actuating all the industrial robots on a world coordinate system, and a position designated in the actuating instructions by the world coordinate system is converted by the reading/compiling means into a position designated by a coordinate system peculiar to each robot, so as to prevent interference between robots during actuation.

This robot control system stores a single general control program in a single storage means, and a single instruction reading/compiling means extracts actuating instructions separately from the general control program. Accordingly, instructions for the required motions of the robots can be easily described in the general control program taking into account the coordinated cooperative motions of the robots.

The description of set positions by a world coordinate system facilitates the recognition of the positions of the robots relative to each other and enables the examination of the capability of avoiding interference between the robots of the general control program in organizing the general control program. Furthermore, the use of a single control program for controlling a plurality of robots facilitates recognizing the relation between the motions of the robots, finding errors in the control program, and correcting the errors.

### BRIEF DESCRIPTION OF THE DRAWINGS

The above and other features and advantages of the present invention will become more apparent from the following description taken in conjunction with the accompanying drawings, in which:
Figure 1 is a block diagram of a robot control system for controlling a set of robots for cooperative operation, according to the present invention;
Figure 2 is a time chart of assistance in explaining an example of the cooperative operation of a set of robots under the control of the robot control system of Fig, 1;
Figure 3 is a time chart, similar to Fig.2, of assistance in explaining another example of the cooperative operation of the set of robots under the control of the robot control system of Fig.1;
Figure 4 is a block diagram of a conventional robot control system for controlling a set of robots for cooperative operation;
Figure 5 is a time chart of assistance in explaining an example of the cooperative operation of the set of robots under the control of the robot control system of Fig. 4;
Figure 6 is an illustration of another conventional robot control system; and
Figure 7 is a block diagram of a third conventional robot control system.

### DETAILED DESCRIPTION

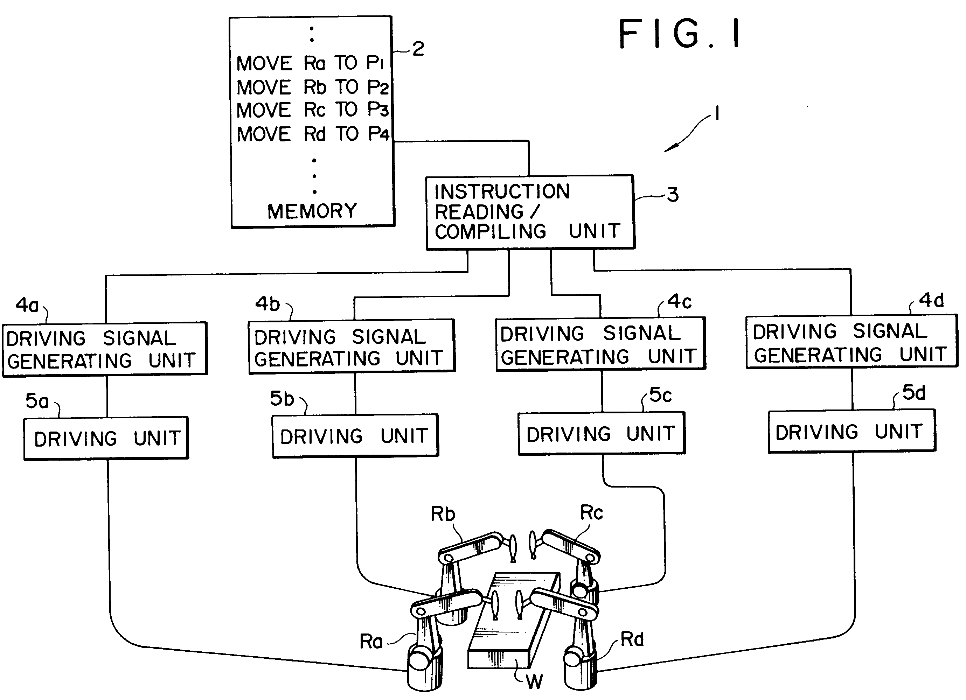

Referring to Fig. 1, a robot control system 1 in a first embodiment according to the present invention controls four robots Ra, Rb, Rc and Rd for cooperative operation. The robot control system 1 comprises a memory 2, an instruction reading/compiling unit 3, driving signal generating units 4a, 4b, 4c and 4d respectively for the robots Ra, Rb, Rc and Rd, and driving units 5a, 5b, 5c and 5d respectively for driving the robots Ra, Rb, Rc and Rd.

A general control program including actuating instructions for the four robots Ra, Rb, Rc and Rd is stored in the memory 2. Examples of the instructions described in the general control program are:
MOVE Ra TO P₁
MOVE Rb TO P₂
MOVE Rc TO P₃
MOVE Rd TO P₄
The instruction "MOVE Ra TO P₁", for example, signifies moving the effector of the robot Ra to a position P₁ designated by a world coordinate system.

The reading/compiling unit 3 reads the general control program and extracts actuating instructions for each robot separately; that is, the reading/compiling unit 3 extracts a robot identifier and the contents of motions for each robot, and then gives the contents of motions to the corresponding robot. The position designated in the actuating instruction by the world coordinate system is converted into a position designated by a coordinate system peculiar to each robot.

Basically, the driving signal generating units 4a, 4b, 4c and 4d are the same in constitution and function as those employed in the conventional robot control system. The driving signal generating units 4a, 4b, 4c and 4d give driving signals in accordance with the actuating instructions given thereto.

The driving units 5a, 5b, 5c and 5d are the same in constitution and function as those employed in the conventional robot control system.

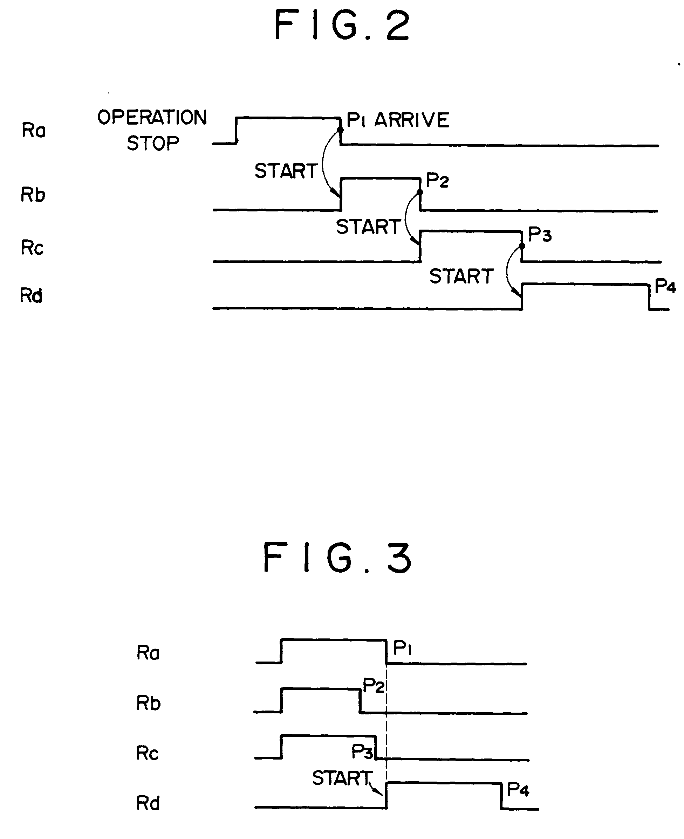

Referring to Fig. 2, when the general control program is executed, the robots Ra, Rb, Rc and Rd move sequentially to positions P₁, P₂, P₃ and P₄ respectively. When an instruction:
CO-MOVE Ra TO P₁
   Rb TO P₂
   Rc TO P₃
MOVE Rc TO P₄
signifying simultaneously moving the robots Ra, Rb and Rc respectively to positions P₁, P₂ and P₃ designated by the world coordinate system and, subsequently, moving the robot Rd to a position P₄ designated by the world coordinate system, is executed, the robots Ra, Rb and Rc move simultaneously to the positions P₁, P₂ and P₃ respectively, and then the robot Rd moves to the position P₄ as shown in Fig. 3.

Thus, the robot control system 1 controls the four robots Ra, Rb, Rc and Rd by executing the single general control program without requiring any communication instruction. Since the positions are designated by the world coordinate system, the general control program can be easily organized taking into account the cooperative operations of the four robots Ra, Rb, Rc and Rd.

Furthermore, having the single memory 2 and the single reading/compiling unit 3, and needs no communication line, the robot control system 1 is simple in constitution.

Still further, since relation between the respective actions of all the robots can be understood from the single general control program, errors in the general control program can be easily found and corrected.

## Claims

1. A robot control system for controlling a plurality of industrial robots for cooperative operation on a single workpiece, comprising;
storage means (2) storing a single program comprising actuating instructions for actuating the industrial robots;
a single reading/compiling means (3) for reading the actuating instructions and extracting the actuating instructions for each industrial robot separately; and
a plurality of executive means (4,5) respectively for driving the industrial robots according to the actuating instructions; characterised in that
the single program incorporates the actuating instructions for actuating all the industrial robots on a world coordinate system, and a position designated in the actuating instructions by the world coordinate system is converted by the reading/compiling means into a position designated by a coordinate system peculiar to each robot, so as to prevent interference between robots during actuation.

## Patentansprüche

1. Robotersteuersystem zum Steuern einer Vielzahl von Indu-strierobotern für ein gemeinsames Arbeiten an einem einzelnen Werkstück mit
einer Speichereinrichtung (2), die ein einzelnes Programm mit Betriebsbefehlen zum Betreiben der Industrieroboter speichert,
einer einzelnen Lese-/Kompilier-Einrichtung (3) zum Lesen der Betriebsbefehle und zum getrennten Entnehmen der Betriebsbefehle für jeden Industrieroboter und
einer Vielzahl von Ausführungseinrichtungen (4, 5) jeweils zum Steuern der Industrieroboter gemäß den Betriebsbefehlen,
**dadurch gekennzeichnet, daß**
das einzelne Programm die Betriebsbefehle zum Betreiben aller Industrieroboter in einem Weltkoordinatensystem beinhaltet, und eine in den Betriebsbefehlen durch das Weltkoordinatensystem bestimmte Position durch die Lese-/Kompilier-Einrichtung in eine durch ein für jeden Roboter eigenes Koordinatensystem bestimmte Position umgewandelt wird, damit eine Behinderung zwischen den Robotern während des Betriebs verhindert wird.

## Revendications

1. Système de commande de robots destiné à commander plusieurs robots industriels afin que ceux-ci agissent de manière coopérative sur une pièce à traiter unique, comportant ;
des moyens de mémorisation (2) mémorisant un programme unique comportant des instructions d'actionnement pour actionner les robots industriels,
des moyens de lecture/compilation (3) uniques, pour la lecture des instructions d'actionnement et l'extraction des instructions d'actionnement pour chaque robot industriel, séparément, et
plusieurs moyens d'exécution (4, 5) entraînant les robots industriels respectifs conformément aux instructions d'actionnement,
caractérisé en ce que
le programme unique comporte les instructions d'actionnement destinées à actionner la totalité des robots industriels en référence à un système de coordonnées universelles, et une position désignée dans les instructions d'actionnement à l'aide du système de coordonnées universelles est convertie par les moyens de lecture/compilation en une position désignée à l'aide d'un système de coordonnées spécifique à chaque robot, de manière à empêcher toute interférence entre les robots au cours de leur actionnement.
